# EUROPÄISCHE PATENTSCHRIFT

(11) **EP 1 587 728 B1**
(45) Veröffentlichungstag und Bekanntmachung des Hinweises auf die Patenterteilung: **11.10.2006**
(21) Anmeldenummer: 04705049.7
(22) Anmeldetag: 26.01.2004
(51) Int. Cl.: B62D 33/02

(54) **RUNGE MIT INTEGRIERTER VORRICHTUNG ZUR LADUNGSSICHERUNG, INSB. FÜR TRANSPORTFAHRZEUGE MIT PLANENAUFBAUTEN**
STANCHION WITH AN INTEGRATED DEVICE FOR SECURING A LOAD, IN PARTICULAR FOR TARPAULIN-COVERED TRANSPORT VEHICLES
RANCHER A DISPOSITIF INTEGRE POUR SECURISER UN CHARGEMENT, NOTAMMENT SUR DES VEHICULES DE TRANSPORT BACHES

(30) Priorität: 27.01.2003 DE 10303058; 27.01.2003 DE 20301201 U
(43) Veröffentlichungstag der Anmeldung: 26.10.2005
(73) Patentinhaber: Lorenz Gillhuber - Transporte und Lagerung, 85375 Neufahrn (DE)
(72) Erfinder: RUMRICH, Herbert, 85716 Unterschleissheim (DE)
(74) Vertreter: Hellmich, Wolfgang
(86) Internationale Anmeldenummer: PCT/DE2004/000115
(87) Internationale Veröffentlichungsnummer: WO 2004/067362

(56) Entgegenhaltungen:
- EP-A- 1 354 790
- DE-C- 4 321 516
- US-A- 5 937 972

## Beschreibung

Die vorliegende Erfindung betrifft eine Runge, insbesondere für Fahrzeuge mit Planenaufbauten zum Transport sogenannter Ladeeinheiten, einen Aufbau, insbesondere Planenaufbau, umfassend derartige Rungen sowie ein mit einem derartigen Aufbau ausgestattetes Transportfahrzeug.

Bei Straßen- und Schienenfahrzeugen oder dergleichen muss aufgrund der dynamisch einwirkenden Kräfte die Ladung insbesondere nach vorne, nach hinten sowie seitlich gesichert werden. Die in der Bundesrepublik Deutschland allgemein anerkannte VDI-Richtlinie 2700 und Folgenummern sehen zu diesem Zweck dynamische Verzögerungen in Fahrtrichtung von 0,8 g (Bremskraft) und entgegen der Fahrtrichtung von 0,5 g (Beschleunigungskraft) vor. Die seitlich jeweils aufzunehmenden physikalischen Kräfte (Fliehkräfte) betragen ebenfalls 0,5 g. Eine jede auf die Ladung wirkende Kraft muss nach Abzug der Reibung von geeigneten Ladungssicherungsmitteln aufgenommen werden. Verkehrssicherheit ist demnach dann gegeben, wenn die Ladung in einer solchen Weise auf das Fahrzeug aufgebracht ist, dass sie z.B. auch bei einer Vollbremsung nicht verrutschen, umkippen oder herabfallen kann.

Es werden heute viele Güter in sogenannten Ladeeinheiten (z.B. Paletten, Gitterboxen, Mehrwegbehältern etc.) transportiert. Diesen Gütern ist oft gemeinsam, dass sie eine eigene Untereinheit in Form eines kompakten Blocks bilden. Sie werden somit im Wesentlichen formschlüssig Verladen. Dies hat zum Vorteil, dass in der Praxis allenfalls das Ladungsende oder der Ladungsanfang derartiger in sich geschlossener Ladeeinheiten ggf. mit quer eingerasteten Sperrbalken und/oder Halte- bzw. Sicherungsgurten zusätzlich gesichert werden braucht. Ansonsten liegen die Ladeeinheiten, welche typischerweise z.B. 845 mm breit und 1245 mm lang sind oder ein Vielfaches davon betragen, im Wesentlichen formschlüssig an den Stirnflächen des Aufbaus sowie an seitlich der Ladungsfläche verlaufende, etwa 2500 mm voneinander beabstandete, Einstecklatten an. In diese lassen sich nun ggf. die Sperrbalken kraftschlüssig eingerasten. Wenn die Einstecklattenreihe seitlich vom Anfang der Lastfläche bis zu deren Ende durchläuft, kann so eine Kraft in Fahrzeuglängsrichtung in diese Einstecklatten eingeleitet werden. Sperrbalken und Einstecklatten sind zumeist aus Holz, mitunter aber auch fortschrittlicher aus Aluminium gefertigt.

Bei Aufbauten, insbesondere Planenaufbauten, von Straßen- oder Schienenfahrzeugen, beispielsweise bei größeren Aufliegern von Lastkraftwagen, unterteilen metallische seitliche Ständer bzw. Stützen, die sogenannten "Rungen", die längsverlaufenden Außenflächen des Transportgefäßes in einzelne Segmente. Fahrzeugaufbauten z.B. mit seitlicher Schiebeplane, sog. Curtainsider, weisen dabei in der Regel schiebbare Rungen auf, welche zumindest in ihrem der Ladefläche zugeordneten Fußbereich an deren äußeren Rand im Ladebodenbereich in allen drei Raumachsen arretiert werden können. Oben am Kopf der Rungen ist jeweils ein Laufwagen montiert, welcher es ermöglicht, dass die verschiebbaren Rungen in entriegeltem Zustand in Richtung der Fahrerkabine oder zum Heck des Fahrzeugs verschiebbar sind. Auf diese Weise kann ein seitlicher Zugang zu der Ladefläche geschaffen werden, durch der ein einfaches Be- und Entladen des zu transportierenden Gutes durchgeführt werden kann. Derartige Rungen sind beispielsweise aus der gattungsgemäßen DE 43 21 516 C1 bekannt.

Bei der in erheblichem Umfang gängigen Beförderung von Zulieferbauteilen im Kurzstrecken-Verkehr, beispielsweise in der Automobilindustrie, haben die eingesetzten LKW häufig mehrere Rundfahrten pro Einsatzstunde zwischen Be- und Entladestellen zu bewältigen. Das erfordert die Entfernung der Einstecklatten (wenigstens einseitig) um einen freien seitlichen Zugang bei der Be- und Entladung vorzufinden und das anschließende Wiederanbringen. Der unverhältnismäßig hohe Zeitanteil dieser Tätigkeiten am Beförderungsprozess führt zwangsläufig zu einem enormem Zeitdruck. Man schätzt, dass bei jedem Einsatztag im Schnitt eine Einstecklatte unbrauchbar (verschlissen) und damit eigentlich zum Austausch ansteht, dieser aber nur selten unmittelbar erfolgt. Deswegen und wegen dem insgesamt mühevollen, nicht ungefährlichen und insbesondere zeitaufwendigen Handling wird das Anbringen der Einstecklatten durch das zuständige Personal häufig ganz unterlassen oder nur teilweise durchgeführt, so dass in der Praxis tonnenschwere Ladung überhaupt nicht oder nur unzureichend gesichert ist, was aufgrund des damit einhergehenden Gefährdungspotentials einen gravierenden Verstoß gegen die eingangs erwähnten Sicherungsbestimmungen darstellt und ggf. sogar strafrechtliche Folgen für die nach der Gesetzeslage Verantwortlichen nach sich ziehen kann.

Zur Vermeidung dieser Problematik ist beispielsweise aus der DE 101 45 000 C1 eine speziell ausgebildete Seitenwand für Lastwagen, Lastanhänger, Sattelauflieger oder dergleichen bekannt, bei der im Abstand nebeneinander angeordnete vertikale Rungen in Schienen des Dachrahmens und der Ladefläche in Längsrichtung der Seitenwand verschiebbar sind, wobei jede zweite Runge aus den Schienen lösbar ist und zwischen benachbarten Rungen in horizontaler Richtung verlaufende Sicherungsstreben vorgesehen sind, deren Enden um in vertikaler Richtung verlaufende Schwenkachsen schwenkbar mit den Rungen verbunden sind.

Der Erfindung liegt die Aufgabe zugrunde, eine Runge, einen Aufbau sowie ein Transportfahrzeug der eingangs beschriebenen Art zu schaffen, mittels welchem die genannten Nachteile vermeiden, d.h. insbesondere ein einfaches, sicheres, weitgehend unfallgeschütztes Handling, vorzugsweise im Rahmen eines Zwangsablaufs, gestattet und gleichzeitig den Bestimmungen für die Ladungssicherung genügt.

Diese Aufgabe wird erfindungsgemäß durch eine Runge mit den Merkmalen gemäß Patentanspruch 1, durch einen Aufbau, insbesondere Planenaufbau, mit den Merkmalen gemäß Patentanspruch 16 sowie durch ein Transportfahrzeug mit den Merkmalen gemäß Patentanspruch 18 gelöst. Vorteilhafte Aus- und Weiterbildungen, welche einzeln oder in Kombination miteinander eingesetzt werden können, sind in den abhängigen Ansprüchen wiedergebenden.

Der Gegenstand der vorliegenden Erfindung geht von einer Runge, insbesondere für Fahrzeuge mit Planenaufbauten zum Transport sogenannter Ladeeinheiten aus, welche an ihrem oberen Ende mittels eines oberen Verlagerungsmittels entlang einer an der Karosserie oder dem Chassis des Transportfahrzeugs angeordneten oberen linearen Längsstruktur unabhängig von einer benachbarten Runge beweglich führbar ist und mittels Feststellmittel in einer Position entlang dieser Karosserie oder dieses Chassis festsetzbar ist. Die Runge nach der Erfindung zeichnet sich erfindungsgemäß durch einen im Wesentlichen geradlinigen Mittelabschnitt aus, an welchem wenigstens einseitig Auskragungen derart ausgebildet sind, dass eine längsseitliche Sicherung der Ladeeinheiten ohne weitere Einstecklatten erreicht wird. Bei einer derart ausgebildeten Runge entfällt in vorteilhafter Weise das mühsame Entfernen und wieder Anbringen von Einstecklatten und die damit verbundenen Unfallrisiken für das Bedienungspersonal. Vielmehr lassen sich die Auskragungen einfach zusammen mit der Runge in Richtung der Fahrerkabine oder zum Heck des Transportfahrzeuges verschieben. Die durch die Erfindung erzielbaren Einsparungen in Form des Wegfalls verschlissener Einstecklatten verringern auf Dauer die Betriebskosten bei gleichzeitiger Sicherstellung der Einhaltung der bestehenden Bestimmungen zur Ladungssicherung.

Erfindungsgemäß bevorzugt sind an beiden Seitenflächen des geradlinigen Mittelabschnitts der Runge eine etwa gleiche Anzahl an Auskragungen ausgebildet, vorzugsweise angeschweißt. Dadurch wird bei formschlüssiger Verladung in vorteilhafter Weise verhindert, dass kinetische Energie frei werden und es zwangsläufig zur Verformung des Aufbaus kommen kann.

Eine einfache und preiswerte, insbesondere für die Massenfertigung geeignete Runge lässt sich nach der Erfindung bevorzugt dadurch erzielen, dass die Auskragungen sich im Wesentlichen parallel zur Längsrichtung des Transportfahrzeuges erstrecken. Freilich sind auch unter einem Winkel zur Längsrichtung des Transportfahrzeuges ausgerichtete Auskragungen miterfasst, solange diese eine längsseitige Sicherung von Ladeeinheiten, insb. gegen umkippen oder herunterfallen, gewährleisten.

Zweckmäßig ist, wenn die Auskragungen lediglich eine Erstreckung von weniger als 50 %, insbesondere von 40 %, vorzugsweise weniger als 30 % der Rungenlänge aufweisen. Dies macht zwar ggf. den Einsatz zusätzlicher Rungen je Fahrzeugseite erforderlich, reduziert aber in vorteilhafter Weise das jeweilige Eigengewicht der Rungen und erleichtert damit deren Handling.

Zwecks Verbesserung der Steifigkeit sind zwei benachbarte Auskragungen bevorzugt einstückig gleich einem Bügel oder Rohrrahmen ausgebildet. In einer weiteren Ausgestaltung dieser Überlegung wird vorgeschlagen, dass in Vertikalerstreckung zwei benachbarte Bügel über Querverstrebungen miteinander verbunden, vorzugsweise verschweißt, sind. Darüber hinaus können zwei benachbarte Bügel in Horizontalerstreckung zusätzlich mittels mechanischer und/oder elektromagnetischer Koppelelemente in Wirkverbindung gebracht werden.

Während des Transports der Ladung ist von Vorteil, wenn die Rungen an definierten Betriebspositionen, welche sich beispielsweise am Schwerpunkt des Ladeguts orientieren können, festsetzbar wären. Dazu wird vorgeschlagen, dass der Fuß der Runge an einer beliebigen oder definierten Stelle entlang des Längsaußenrands der Karosserie oder dem Chassis des Transportfahrzeuges mittels eines unteren Feststellmittels festsetzbar ist. Alternativ oder kumulativ dazu wird vorgeschlagen, den Rungenkopf an einer beliebigen oder definierten Stelle entlang der oberen linearen Längsstruktur mittels eines oberen Feststellmittels, beispielsweise durch Eingriff eines Riegels in eine Öffnung, festsetzbar auszugestalten. Kommen ein unteres und ein oberes Feststellmittel zum Einsatz wird vorgeschlagen, dass diese vorzugsweise dergestalt zusammenwirken, dass der Rungenkopf entlang der oberen linearen Längsstruktur nach einer Verriegelungsbewegung des Rungenfußes festsetzbar ist.

Das Festsetzen der Runge, insbesondere in einer definierten Position, wird erfindungsgemäß bevorzugt erleichtert, wenn am Rungenfuß wenigstens einseitig ein Stützelement angeordnet, vorzugsweise angeschweißt, ist. Ein derartiges Stützelement nimmt zudem in vorteilhafter Weise etwaig auf die Runge während einer Transportfahrt einwirkende Biegemomente auf.

In einer weiteren bevorzugten Ausgestaltung der Erfindung sind der Rungenkopf und der im Wesentlichen geradlinige Mittelabschnitt der Runge zwecks Höhenausgleich zweistückig sowie gegeneinander verschiebbar ausgebildet. Zweckmäßiger Weise dienen hierbei die Innenflächen des im Wesentlichen geradlinigen Mittelabschnitts der Runge als Führung für den Rungenkopf. Das Handling derartiger Rungen mit einem als Schiebestück ausgebildeten Rungenkopf ist zusätzlich erleichtert, wenn zwischen geradlinigem Mittelabschnitt der Runge und dem darin geführten Rungenkopf ein Federelement angeordnet ist, welches in vorteilhafter Weise - ähnlich wie bei einem Kofferraumdeckel - ein Anheben des Rungenfußes in die am Fahrzeugaußenrahmen ausgebildeten Rungenaufnahmen bzw. einen Rungenverschluss erleichtert. So lassen sich Rungen nach der Erfindung mit lediglich zwei Fingern anheben, wenn als Federelemente in einfacher Weise beispielsweise Gummibänder oder auch Gasdruckdämpfer Verwendung finden.

Mittels eines vorzugsweise zwischen dem im Wesentlichen geradlinigen Mittelabschnitt der Runge und dem Rungenkopf vorgesehenen Fixiermittels lässt sich die Runge auf eine derartige Gesamtlänge fixieren, dass ein Anheben des die Längsverlagerungsstruktur tragenden Dachrahmens des Aufbaus während des Ladevorgangs ermöglicht ist, wodurch vorteilhaft das Be- oder Entladen des Transportfahrzeugs erleichtert ist.

Die vorliegende Erfindung betrifft auch einen Aufbau, insbesondere einen Planenaufbau, für Transportfahrzeuge, mit einer oberen linearen Längsstruktur, an welcher wenigstens eine erfindungsgemäße Runge, wie zuvor beschrieben, verschiebbar aufgehängt ist, wodurch gegenüber aus dem Stand der Technik bekannter Aufbauten vorteilhaft ein deutlich vereinfachter seitlicher Zugangs zu einer Ladefläche gegeben ist, indem sich die Auskragungen einfach zusammen mit der Runge in Richtung der Fahrerkabine oder zum Heck des Transportfahrzeuges verschieben lassen.

Erfindungsgemäße bevorzugt ist die obere lineare Längsstruktur derart ausgebildet, dass die Führbarkeit einer in der Struktur vor den Rungen führbaren Schiebeplane durch eine jede Runge blockiert ist, welche mittels ihrer Feststellmittel nicht funktionsgemäß festgesetzt ist. Damit zwingt der erfindungsgemäße Planenaufbau in vorteilhafter Weise das verantwortliche Bedienungspersonal zum vorschriftsmäßigen Positionieren und Verriegeln der Rungen.

Die vorliegende Erfindung betrifft des weiteren ein Transportfahrzeug, insbesondere Straßen- oder Schienenfahrzeug wie Lastkraftwägen oder Wagons, welches sich durch einen, im Wesentlichen oberhalb einer Ladungsfläche angeordneten Aufbaus auszeichnet, welcher erfindungsgemäße Rungen umfasst.

Die Verkehrssicherheit derartiger Transportfahrzeuge wird verbessert, wenn zusätzlich seitlich der Ladungsfläche Anschlagsleisten angeordnet, vorzugsweise angeschweißt, werden. Dabei ist jedoch darauf zu achten, dass diese nicht das Be- bzw. Entladen mittels eines Gabelstaplers behindern. Dazu werden Anschlagsleisten mit einer maximale Höhe von 50 %, insbesondere von 40 % vorzugsweise von 30 % der Höhe einer EuroNorm-Palette, vorgeschlagen.

Die Verkehrssicherheit derartiger Transportfahrzeuge wird weiter erhöht, wenn die Ladungsfläche mit einen Bodenbelag, welcher insbesondere eine hohe Widerstandskraft aufweist gegen das Verschieben eines Körpers auf einer Unterseite (sog. Reibkraft), beispielsweise zwischen Ladegut und Ladefläche, ausgelegt bzw. beschichtet ist. Die Reibkraft wird physikalisch durch den Reibbeiwert µ ausgedrückt. Man unterscheidet zwischen zwei Arten von Reibungskräften, der Haftreichung und der Gleitreibung. Erstere ist die Widerstandskraft, die ein ruhender Körper dem Verschieben auf seiner Unterlage entgegensetzt, letzterer ist die Widerstandskraft, die ein bewegter Körper dem weiteren Verschieben auf seiner Unterlage entgegensetzt. Die zusätzliche Ausstattung mit einem derartigen Bodenbelag erlaubt in vorteilhafter Weise den sicherheitsgesteigerten Transport nicht beidseitig formschlüssig verladbarer Güter wie Ladeeinheiten von 2000 mm Breite und 2200 mm Länge.

Die vorliegende Erfindung erhöht in vorteilhafter Weise den sicheren Transport verschiedenlichter Ladungen bei verbesserter Flexibilität und erleichterten seitlichen Zugang. Sie zwingt zudem das verantwortliche Bedienungspersonal zum vorschriftsmäßigen Positionieren und Verriegeln der Rungen, da anderenfalls die Schiebeplanen nicht geschlossen werden können. Die Erfindung eignet sich daher insbesondere für einen Einsatz im Kurzstreckenverkehr mit hohem Zeitanteil für viele Be- und Entladevorgänge wie sie beispielsweise in der Automobilindustrie bei der Beförderung von Zulieferbauteilen üblich sind.

Zusätzliche Einzelheiten und weitere Vorteile der Erfindung werden nachfolgend an Hand eines bevorzugten Ausführungsbeispieles in Verbindung mit der beigefügten Zeichnung beschrieben.

Darin zeigen schematisch:
- Fig. 1: den Aufbau eines herkömmlichen Transportgefäßes eines Straßen- oder Schienenfahrzeuges;
- Fig. 2: die perspektivische Gesamtansicht einer ersten verlagerbaren Runge von ihrer Vorderseite und einer zweiten Runge von ihrer Rückseite;
- Fig. 3: die perspektivische Gesamtansicht einer ersten verlagerbaren Wagenrunge von ihrer Vorderseite und einer zweiten Wagenrunge von ihrer Rückseite nach der Erfindung; und
- Fig. 4: den Aufbau eines Transportgefäßes eines Straßen- oder Schienenfahrzeuges mit Wagenrungen nach Fig. 3.

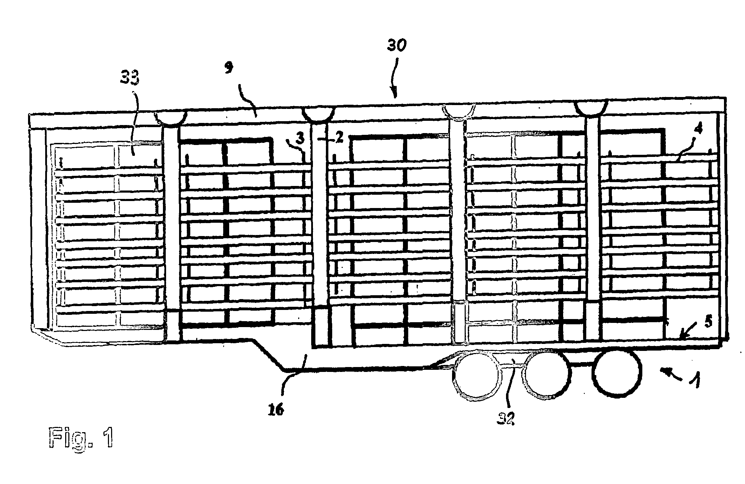

Fig. 1 zeigt den auf einer Karosserie bzw. dem Chassis 32 angeordneten Aufbau 30 eines herkömmlichen Straßen- oder Schienenfahrzeuges 1. Die längsverlaufenden Außenflächen des Transportfahrzeuges 1 sind durch Ständer bzw. Stützen, die sogenannten "Rungen" 2, in einzelne Segmente unterteilt. An den Rungen 2 nach dem Stand der Technik sind regelmäßig beabstandet Laschen 3 ausgebildet, welche zur Aufnahme seitlich einer Ladefläche 5 verlaufender Einstecklatten 4 dienen, beim Be- oder Entladevorgang mit einem Gabelstapler häufig aber bis zur Unbrauchbarkeit deformiert, d.h. beschädigt, werden können. Die Einstecklatten 4 dienen der Sicherung eines Ladegutes 33 in längsseitlicher Richtung. Um einen seitlichen Zugang zur Ladefläche 5 für die Be- und Entladung des Transportfahrzeuges 1 zu schaffen müssen die Einstecklatten 4 entfernt werden, was bei der Vielzahl an Einstecklatten 4 mühevoll, zeitraubend und unfallträchtig, sowie wegen der Höhe der Fahrzeug-Aufbauten im oberen Bereich nur mit Leitern oder zusätzlichen Werkzeugen (z.B. Stange mit Gabel) möglich ist. Die Rungen 2 selbst sind in Richtung der Fahrerkabine und/oder zum Heck des Fahrzeugs 1 verschiebbar.

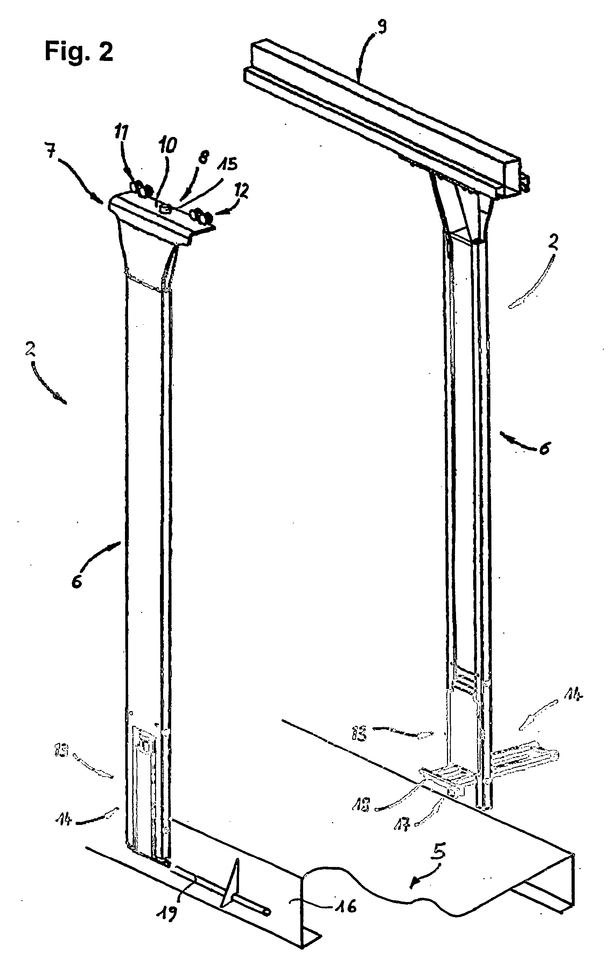

Fig. 2 zeigt eine perspektivische Gesamtansicht einer ersten verlagerbaren Runge 2 von ihrer Vorderseite und einer zweiten Runge 2 von ihrer Rückseite nach dem Stand der Technik, aufweisend folgende grundsätzliche Mittel. Die Runge 2 mit im Wesentlichen geradliniger Form umfasst einen geradlinigen Mittelabschnitt 6 sowie an ihrem oberen Ende bzw. Kopf 7 ein oberes Verlagerungsmittel 8, mittels dessen die Runge 2 entlang einer oberen linearen Längsverlagerungsstruktur 9, welche Teil des Aufbaus 30 ist, verschiebbar angebracht ist. Das obere Verlagerungsmittel 8 ist beispielsweise in Form einer Laufkatze 10 ausgebildet, die mit Walzen oder Rollenpaaren 11, 12 ausgestattet ist, welche mit einer Rollenbahn in Form einer Schiene oder funktional äquivalenter Mittel in Kontakt stehen. So kann z.B. die Rollenbahn nach Art einer Einschienenbahn aus einem Rohr mit geschlossenem Querschnitt und einer unteren Nut vorgesehen sein, in der die Walzen bzw. Rollen 11, 12 entlang laufen und an dem die geradlinige Runge 2 mit Funktionsspiel verlagerbar befestigt ist.

Zum Festsetzen einer jeden Runge 2 in einer Betriebsposition weist jede Runge 2 an ihrem unterem Ende, am sog. Rungenfuß 13 und ggf. an ihrem oberen Ende, dem sog. Rungenkopf 7 ein Feststellmittel 14, 15 auf.

Das obere Feststellmittel kann beispielsweise in Form einer an der oberen linearen Struktur vorgesehenen Öffnung (nicht dargestellt) und eines Riegels 15 in der Platte des Rahmens der Laufkatze 10 oder umgekehrt ausgebildet sein. Die Auswahl des oberen Feststellmittels ist bevorzugt mit der Kinematik des unteren Feststellmittels kompatibel. Das obere Festsetzen resultiert folglich aus dem Eingriff des Riegels 15 in die Öffnung, was vorzugsweise ausschließlich durch die Feststellbewegung des Rungenfußes 13 steuerbar ist, beispielsweise durch eine Hubbewegung der Runge 2 nach dem unteren Festsetzen. Das obere 15 und das untere Feststellmittel 14 wirken somit derart zusammen, das ein vollständiges Festsetzen in einer Betriebsposition sichergestellt ist. -

Das untere Feststellmittel 14 dient dem Festsetzen der Runge 2 an einem Längsrand 16 der Karosserie oder dem Chassis 32 des Fahrzeugs 1. Hierbei handelt es sich beispielsweise um einen am Rungenfuß 13 ausgebildeten Schwenkriegel 17, welcher von einem Rahmen gebildet ist, der um eine Querachse der Runge 2 schwenkbar und durch ein in Axialrichtung offenes zylindrisches Rohr 18 verlängert ist, welches mit einer am Längsrand 16 ausgebildeten Rungenaufnahme, im einfachsten Fall einer Stange 19, in Eingriff bringbar ist. Jeder Riegel 17 ist zwischen zwei Grenzstellungen schwenkbar:
einer Horizontalstellung, in welcher er die Runge 2 freigibt und sich im Wesentlichen quer zu dieser erstreckt. In dieser Stellung sind die Rungen 2 entlang des Chassis 32 des Fahrzeugs bis zu einer gewünschten Position verlagerbar; und
einer Vertikalstellung, in welcher er die Runge 2 festsetzt bzw. verriegelt und der Riegel 17 in eine im Innern der Runge 2 im Bereich ihrer Unterseite angeordnete Aufnahmeöffnung zurücktritt und mit seinem unteren Feststellende 18 auf einem in Längsrichtung angeordneten Stützelement, beispielsweise einer Stange 19 oder dergleichen an den randseitigen Kanten 16 des Chassis 32 des Fahrzeugs 1, aufsitzt.

Der Schwenkriegel 17 ist in der Verriegelungsstellung der Runge 2 durch die Druckkraft des Hebels des Riegels oder durch elastische Rückstellkräfte gehalten. Aus Sicherungsgründen kann eine zusätzliche mechanische Verriegelung vorgesehen sein. Selbstverständlich sind auch andere Ausführungsformen von Feststellmittel wie Hebelverschlüsse oder Rasteinrichtungen denkbar.

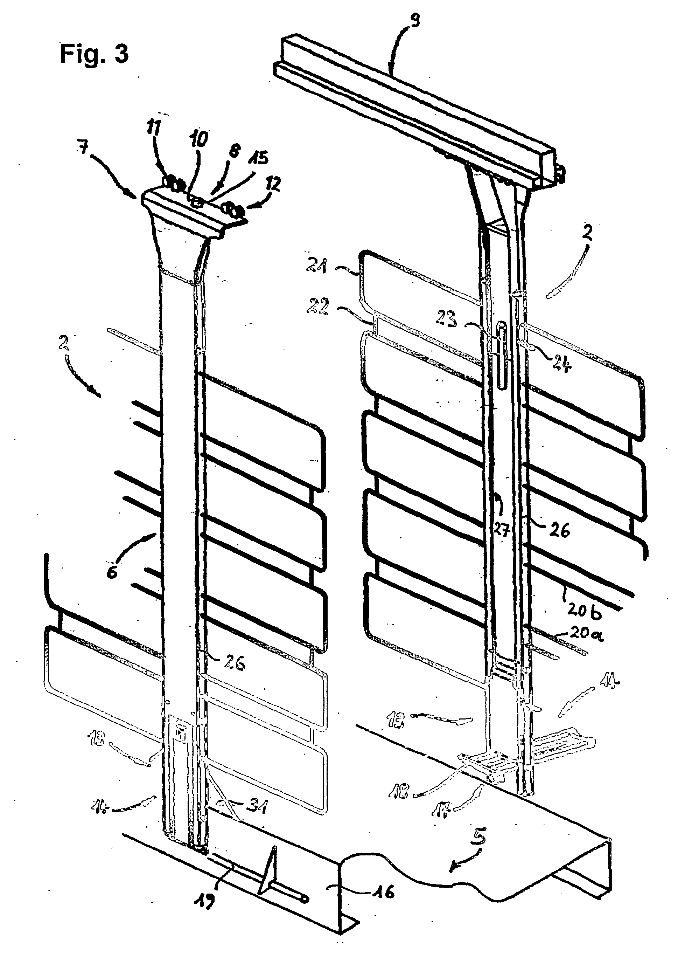

Fig. 3 zeigt eine Wagenrunge 2, insbesondere für Planenaufbauten von Transportfahrzeugen 1 nach der Erfindung. Deutlich erkennbar ist, wie an den beiden Seitenflächen 26 des im Wesentlichen geradlinigen Mittelabschnitts 6 in einer erfindungsgemäß bevorzugten Ausführungsform der Runge 2 eine etwa gleiche Anzahl angeschweißter Abstützelemente bzw. Haltebügel (Rohrrahmen), sog. Auskragungen 20a, 20b, ..., angeordnet sind. Aus Stabilitätsüberlegungen sind jeweils zwei benachbarte Bügel 21 über Querverstrebungen 22 zusätzlich miteinander verbunden, vorzugsweise verschweißt. Im Gegensatz zu den Ecken und Kanten aufweisenden Einstecklatten 4 aus dem Stand der Technik schützen die abgerundeten Haltebügel 21 eine vor den Rungen 2 laufende Abdeck- bzw. Scheibeplane 35 vor Beschädigungen.

Die in Fig. 3 dargestellte erfindungsgemäße Runge 2 ist wie die Runge 2 in Fig. 2 an einer oberen linearen Längsstruktur 9 verschiebbar aufgehängt, und kann mittels eines unteren 14 und/oder oberen 15 Feststellmittels in einer definierten Betriebsposition festgesetzt werden. Hierzu dienen z.B. Rungenaufnahmen bzw. - verschlüsse 19, welche im Bereich der Hauptladefläche 28 beispielsweise aufnahmemäßig und damit regelmäßig beabstandet ausgebildet, im Bereich der etwas höher liegenden Nebenladefläche 29 spannhebelförmig und damit stufenfrei wählbar sind. Das Festsetzen der Runge 2 in einer definierten Position wird vorzugsweise durch am Rungenfuß 13 zusätzlich angeordnete Stützelemente 31 erleichtert, indem beispielsweise die Unterfläche des Stützelemente 31 und die Ladefläche 5 des Transportfahrzeuges 1 zueinander korrespondierend ausgebildet sind.

Erfindungsgemäß bevorzugt ist der Rungenkopf 7 und der geradlinige Mittelabschnitt 5 der Runge 2 zweistückig sowie gegeneinander verschiebbar ausgebildet, wobei die Innenflächen 27 des geradlinigen Mittelabschnitts 6 zugleich als Führung für den Rungenkopf 7 dienen. Eine derartige Verschiebbarkeit wird in vorteilhafter Weise durch die Anordnung eines Federelements 23, welches vorzugsweise eine Gasdruckfeder ist, zwischen geradlinigem Mittelabschnitt 5 der Runge 2 und dem darin geführten Rungenkopf 7 erleichtert. Ein ebenfalls dort benachbart vorgesehenes Fixiermittel 24 dient in vorteilhafter Weise der Fixierbarkeit der Runge 2 auf eine Überlänge, mittels der das Anheben des die Längsverlagerungsstruktur 9 tragenden Daches und damit eine erleichtertes Be- bzw. Entladen des Transportfahrzeuges 1 ermöglicht ist.

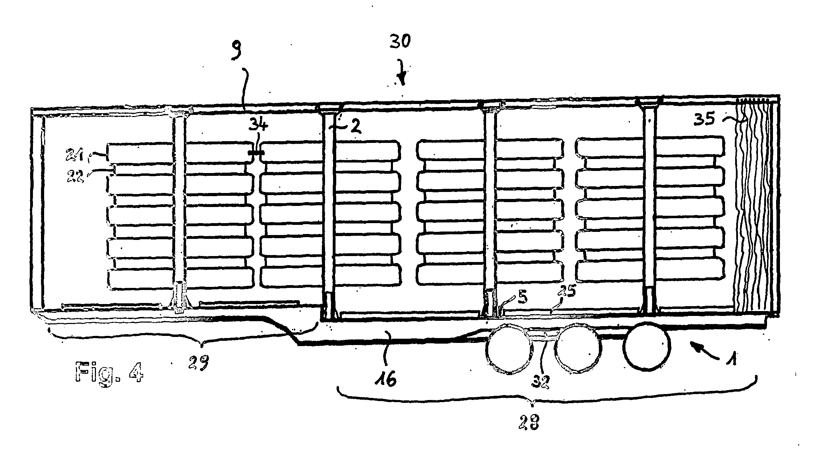

Fig. 4 zeigt den Planenaufbau 30 eines Transportfahrzeuges 1 mit Rungen 2 nach Fig. 3. Zwecks Verbesserung der Steifigkeit können zwei in Horizontalerstreckung benachbarte bügelförmige Auskragungen 21 mittels einem Koppelelement 34 in Wirkverbindung gebracht werden. Zur weiteren Sicherung der Ladung 33 gegen ein seitliches Verrutschen aufgrund von Fliehkräften sind am Fahrzeugaußenrahmen 16 Anschlagleisten 25 angeschweißt, welche in ihrer Vertikalerstreckung einen Gabelstapler nicht beim Be- bzw. Entladen des Transportfahrzeuges 1 behindern dürfen. Die Rutschfestigkeit der Ladungsfläche 5 wird des weiteren erhöht, wenn diese einen Bodenbelag mit einem hohen Reibwert µ aufweist, in einfacher Weise beispielsweise mit einer Antirutschmatte ausgelegt ist. Bei materialgepaart aufgebauten Ladeflächen 5, beispielsweise bei Holz/Holz, Metal/Holz, Metall/Metall oder dergleichen, bietet sich vorzugsweise eine Beschichtung mit einer aushärtenden Masse oder Farbe an. Ein Reibbeiwert µ von beispielsweise 0,4 bedeutet, dass eine Kraft von 400 kg nötig ist, um eine Ladung 33 von 1000 kg auf der Ladefläche 5 zu verschieben. Die Rungen 2 müssen also derart ausgebildet sein, dass sie 600 kg, die nicht durch Reibung gesichert sind, aufnehmen. Bei der Festlegung des Reibbeiwertes µ sollte im Zweifelsfalle ein geringerer Reibbeiwert veranschlagt werden. Wird ein geringerer µ-Wert bestimmt, z.B. µ = 0,2 und die Ladung beträgt 1000 kg, so sind mittels der Rungen 2 noch 800 kg zu sichern. Der Ladungsanfang selbst liegt vorzugsweise an der Stirnfläche des Aufbaus formschlüssig an. Das Ladungsende ist ggf. mittels an den Rungen 2 anordbarer handelsüblicher Halte- bzw. Sicherungsgurte (nicht dargestellt) zusätzlich gesichert, insbesondere wenn dieses nicht an der Heckfläche des Aufbaus im Wesentlichen formschlüssig anliegt und einer Kippgefahr unterliegt.

Erfindungsgemäß bevorzugt ist schließlich die obere lineare Längsstruktur 9 derart ausgebildet, dass die Führbarkeit einer in der Struktur 9 vor den Rungen 2 führbaren Schiebeplane 35 durch eine jede Runge 2 blockiert ist, welche mittels ihrer Feststellmittel 14, 15 nicht funktionsgemäß festgesetzt ist. Damit zwingt der erfindungsgemäße Planenaufbau 30 in vorteilhafter Weise das verantwortliche Bedienungspersonal zum vorschriftsmäßigen Positionieren und Verriegeln der Rungen 2.

Die vorliegende Erfindung erleichtert in vorteilhafter Weise den seitlichen Zugang zur Ladefläche 5 eines Transportfahrzeuges 1 und eignet sich daher insbesondere für einen Einsatz im Kurzstreckenverkehr mit hohem Zeitanteil für viele Be- und Entladevorgänge, beispielsweise der Automobilindustrie.

### Bezugszeichenliste

- 1: Straßen- oder Schienenfahrzeug
- 2: Wagenrunge
- 3: Lasche
- 4: Einstecklatte
- 5: Ladungsfläche
- 6: geradliniger Mittelabschnitt der Runge 2
- 7: Rungenkopf
- 8: Verlagerungsmittel
- 9: Längsverlagerungsstruktur
- 10: Laufkatze
- 11: Walzen- oder Rollenpaar
- 12: Walzen- oder Rollenpaar
- 13: Rungenfuß.
- 14: unteres Feststellmittel
- 15: oberes Feststellmittel, Riegel
- 16: Längsaußenrand der Karosserie oder des Chassis 32 des Fahrzeuges 1
- 17: Schwenkriegel
- 18: Feststellende des unteren Feststellmittels 14, zylindrisches Rohr
- 19: Rungenaufnahme, Stange
- 20a, 20b: Auskragungen
- 21: Bügelförmig ausgebildete Auskragung, Halterohrrahmen
- 22: Querverstrebungen
- 23: Federelement, Gummiband, Gasdruckdämpfer
- 24: Fixiermittel, Fixierbolzen
- 25: Anschlagsleiste
- 26: Seitenflächen des geradlinigen Mittelabschnitts 6 der Runge 2
- 27: Innenflächen des geradlinigen Mittelabschnitts 6 der Runge 2
- 28: Hauptladefläche
- 29: Nebenladefläche
- 30: Aufbau, insbesondere Planenaufbau
- 31: Stützelement
- 32: Karosserie bzw. Chassis
- 33: Ladeeinheit
- 34: Koppelelement
- 35: Schiebeplane

## Patentansprüche

1. Runge (2), insbesondere für Fahrzeuge (1) mit Planenaufbauten (30) zum Transport sogenannter Ladeeinheiten (33), welche an ihrem oberen Ende (7) mittels eines oberen Verlagerungsmittels (8) entlang einer an der Karosserie oder dem Chassis (32) eines Transportfahrzeugs (1) angeordneten oberen linearen Längsstruktur (9) unabhängig von einer benachbarten Runge (2) beweglich führbar ist und mittels Feststellmittel (14; 15) in einer Position (19) entlang dieser Karosserie oder dieses Chassis festsetzbar ist, wobei die Runge (2) einen im Wesentlichen geradlinigen Mittelabschnitt (6) aufweist, **dadurch gekennzeichnet, daß** an dem Mittelabschnitt wenigstens einseitig Auskragungen (20a, 20b, ...) derart ausgebildet sind, dass eine längsseitliche Sicherung der Ladeeinheiten (33) ohne Einstecklatten (4) erreicht wird.

2. Runge (2) nach Anspruch 1, **dadurch gekennzeichnet, dass** an beiden Seitenflächen (26) des Mittelabschnitts (6) der Runge (2) eine gleiche Anzahl an Auskragungen (20a, 20b, ...) ausgebildet, vorzugsweise angeschweißt, sind.

3. Runge (2) Anspruch 1 oder 2, **dadurch gekennzeichnet, dass** die Auskragungen (20a, 20b, ...) sich im Wesentlichen parallel zur Längsrichtung des Transportfahrzeuges (1) erstrecken.

4. Runge (2) nach Anspruch 1 bis 3, **dadurch gekennzeichnet, dass** die Auskragungen (20a, 20b, ...) eine Erstreckung von weniger als 50 %, insbesondere von 40 %, vorzugsweise weniger als 30 % der Rungenlänge aufweisen.

5. Runge (2) nach einem der vorherigen Ansprüche, **dadurch gekennzeichnet, dass** zwei benachbarte Auskragungen (20a, 20b, ...) einstückig gleich einem Bügel (21) ausgebildet sind.

6. Runge (2) nach Anspruch 5, **dadurch gekennzeichnet, dass** in Vertikalerstreckung zwei benachbarte Bügel oder Rohrrahmen (21) über Querverstrebungen (22) miteinander verbunden, vorzugsweise verschweißt, sind.

7. Runge (2) nach Anspruch 5 oder 6, **dadurch gekennzeichnet, dass** in Horizontalerstreckung zwei benachbarte Bügel (21) mittels mechanischer und/oder elektromagnetischer Koppelelemente (34) verbindbar sind.

8. Runge (2) nach einem der vorherigen Ansprüche, **dadurch gekennzeichnet, dass** der Fuß (13) der Runge (2) an einer beliebigen oder definierten Stelle entlang des Längsaußenrands (16) der Karosserie oder dem Chassis (32) des Transportfahrzeuges (1) mittels eines unteren Feststellmittels (14) festsetzbar ist.

9. Runge (2) nach einem der vorherigen Ansprüche, **dadurch gekennzeichnet, dass** der Rungenkopf (7) an einer beliebigen oder definierten Stelle entlang der oberen linearen Längsstruktur (9) mittels eines oberen Feststellmittels (15), beispielsweise durch Eingriff eines Riegels (15) in eine Öffnung, festsetzbar ist.

10. Runge (2) nach Anspruch 8 oder 9, **dadurch gekennzeichnet, dass** unteres (14) und oberes (15) Feststellmittel dergestalt zusammenwirken, dass der Rungenkopf (7) entlang der oberen linearen Längsstruktur (9) nach einer Verriegelungsbewegung des Rungenfußes (13) festsetzbar ist.

11. Runge (2) nach einem der vorherigen Ansprüche, **dadurch gekennzeichnet, dass** am Rungenfuß (13) wenigstens einseitig ein Stützelement (31) angeordnet, vorzugsweise angeschweißt, ist.

12. Runge (2) nach einem der vorherigen Ansprüche, **dadurch gekennzeichnet, dass** der Rungenkopf (7) und der Mittelabschnitt (5) der Runge (2) zweistückig sowie gegeneinander verschiebbar ausgebildet sind.

13. Runge (2) nach Anspruch 12, **dadurch gekennzeichnet, dass** der Mittelabschnitt (5), insbesondere dessen Innenflächen (27), als Führung für den Rungenkopf (7) dienen.

14. Runge (2) nach Anspruch 12 oder 13, **dadurch gekennzeichnet, dass** zwischen Mittelabschnitt (5) der Runge (2) und dem darin geführten Rungenkopf (7) ein Federelement (23) angeordnet ist.

15. Runge (2) nach Anspruch 12 bis 14, **dadurch gekennzeichnet, dass** zwischen Mittelabschnitt (5) der Runge (2) und dem Rungenkopf (7) ein Fixiermittel (24) vorgesehen ist.

16. Aufbau (30), insbesondere Planenaufbau, für Transportfahrzeuge (1), **gekennzeichnet durch** eine obere lineare Längsstruktur (9), an welcher wenigstens eine Runge (2) nach einem der vorherigen Ansprüche verschiebbar aufgehängt ist.

17. Aufbau (30) nach Anspruch 16, mit einer in der oberen linearen Längsstruktur (9) vor den Rungen (2) führbaren Schiebeplane (35), **dadurch gekennzeichnet, dass** die Längsstruktur (9) derart ausgebildet ist, dass die Führbarkeit der Schiebeplane (35) durch eine jede Runge (2) blockiert ist, welche (2) mittels ihrer Feststellmittel (14; 15) nicht funktionsgemäß festgesetzt ist.

18. Transportfahrzeug (1), insbesondere Straßen- oder Schienenfahrzeug wie Lastkraftwägen oder Wagons, **gekennzeichnet durch** einen, im Wesentlichen oberhalb einer Ladungsfläche (5) angeordneten Aufbaus (30), insbesondere Planenaufbaus, nach einem der Ansprüche 16 oder 17.

19. Transportfahrzeug (1) nach Anspruch 18, **gekennzeichnet durch** seitlich der Ladungsfläche (5) angeordnete, vorzugsweise angeschweißte, Anschlagsleisten (25).

20. Transportfahrzeug (1) nach Anspruch 19, **dadurch gekennzeichnet, dass** die Anschlagsleisten (25) eine maximale Höhe von 50 %, insbesondere von 40 %, vorzugsweise von 30 % der Höhe einer EuroNorm-Palette aufweisen.

21. Transportfahrzeug (1) nach Anspruch 18 bis 20, **dadurch gekennzeichnet, dass** die Ladungsfläche (5) einen Bodenbelag mit einem hohen Reibbeiwert (µ) aufweist.

## Claims

1. Stanchion (2), particularly for vehicles with tarpaulin structures (30) for transporting so-called load units (33), which at its upper end (7) can be flexibly guided, independent of a neighboured stanchion (2), by means of an upper shifting instrument (8) alongside an upper lineary longitudinal structure (9) which is arranged at the body or chassis (32) of a transport vehicle (1) and the stanchion can be fixed by fixing agent (14 ; 15) to a position (19) alongside this body or chassis, this said stanchion (2) comprises an essentially straight-line central section (6), **characterized in that** projections (20a, 20b, ...) are constructed at least on one side of the central section in such a manner, that a longitudinal protection of the load units (33) is achieved without insert bars (4).

2. Stanchion (2) according to claim 1, **characterized in that** an equal number of projections (20a, 20b, ...) are arranged, preferably welded, on both lateral surfaces (26) of the central section (6) of the stanchion (2).

3. Stanchion (2) according to claim 1 or 2, **characterized in that** the projections (20a, 20b, ...) extend essentially parallel to the longitudinal direction of the transport vehicle (1).

4. Stanchion (2) according to claims 1 to 3, **characterized in that** the projections (20a, 20b, ...) have an extent of less than 50%, particularly of 40%, preferably of less than 30% of the length of the stanchion.

5. Stanchion (2) according to one of the preceding claims, **characterized in that** two adjacent projections (20a, 20b, ...) are shaped in one piece like a bracket (21).

6. Stanchion (2) according to claim 5, **characterized in that** in the vertical extent two adjacent brackets or tubular frames (21) are connected, preferably welded, to each other by crossbars (22).

7. Stanchion (2) according to claim 5 or 6, **characterized in that** in the horizontal extent two adjacent brackets (21) can be connected by mechanical and/or electro-magnetic connecting elements (34).

8. Stanchion (2) according to one of the preceding claims, **characterized in that** the foot (13) of the stanchion (2) can be fixed by a lower fixing agent (14) to an optional or defined position alongside the longitudinal exterior border (16) of the body or chassis (32) of the transport vehicle (1).

9. Stanchion (2) according to one of the preceding claims, **characterized in that** the head (7) of the stanchion can be fixed by an upper fixing agent (15) to an optional or defined position alongside the upper lineary longitudinal structure (9), e.g. by locking a bar (12) into an opening.

10. Stanchion (2) according to claim 8 or 9, **characterized in that** the lower (14) and the upper (15) fixing agent work together in such a way, that the head (7) of the stanchion can be fixed alongside the upper lineary longitudinal structure (9) after a locking movement of the foot (13) of the stanchion.

11. Stanchion (2) according to one of the preceding claims **characterized in that** there is arranged, preferably welded, a supporting element (31) at least on one side of the foot (13) of the stanchion.

12. Stanchion (2) according to one of the preceding claims, **characterized in that** the head (7) of the stanchion and the central section (5) of the stanchion (2) are constructed as two pieces as well as they can be shifted against each other.

13. Stanchion (2) according to claim 12, **characterized in that** the central section (5), particularly its interior surfaces (27), serve as guide for the head (7) of the stanchion.

14. Stanchion (2) according to claim 12 or 13, **characterized in that** a resilient element (23) is arranged between the central section (5) of the stanchion (2) and the head (7) of the stanchion which is guided within this central section.

15. Stanchion (2) according to claims 12 to 14, **characterized in that** a fixative (24) is provided between the central section (5) of the stanchion (2) and the head (7) of the stanchion.

16. Structure (30), particularly tarpaulin structure, for transport vehicles (1), **characterized by** an upper lineary longitudinal structure (9), to which, according to one of the preceding claims, at least one stanchion (2) is attached in such a way that it can be shifted.

17. Structure (30) according to claim 16, with a sliding tarpaulin (35) which can be guided in the upper lineary longitudinal structure (9) in front of the stanchions (2) ; this structure is **characterized in that** the longitudinal structure (9) is constructed in such a way that the mobility of the sliding tarpaulin (35) is blocked by each stanchion (2) which (2) is not functionally fixed by its fixing agents (14 ; 15).

18. Transport vehicle (1), particularly road or rail vehicle like trucks or wagons, **characterized by** a structure (30), particularly a tarpaulin structure, essentially arranged above a loading area (5), according to one of the claims 16 or 17.

19. Transport vehicle (1) according to claim 18, **characterized by** stopping bars (25) which are attached, preferably welded, laterally to the loading area (5).

20. Transport vehicle (1) according to claim 19, **characterized in that** the stopping bars (25) have a maximum height of 50%, particularly of 40%, preferably of 30% of the height of a European Standard Pallet.

21. Transport vehicle (1) according to claims 18 to 20, **characterized in that** the loading area (5) has a floor covering with a high friction coefficient (µ).

## Revendications

1. Montant (2), particulièrement pour véhicules (1) avec des structures à bâche (30) pour transporter des soi-disantes unités de charge (33), lequel à son bout supérieur (7) peut être flexiblement dirigé, indépendant d'un montant (2) à côté, par un moyen supérieur de déplacement (8) le long d'une structure supérieure linéaire longitudinale (9) placée au niveau de la carrosserie ou du châssis (32) d'un véhicule de transport (1), et ledit montant peut être fixé par un moyen de fixation (14 ; 15) à une position (19) le long de cette carrosserie ou de ce châssis, lequel montant (2) comportant une partie centrale (6) essentiellement rectiligne, **caractérisée en ce qu'** au moins à un côté de la partie centrale sont agencées des saillies (20a, 20b, ...) de façon à ce qu' une protection longitudinale des unités de charge (33) est réalisée sans lattes à insérer (4).

2. Montant (2) selon la revendication 1, **caractérisé en ce qu'**aux deux surfaces latérales (26) de la partie centrale (6) du montant (2), un nombre égal de saillies (20a, 20b, ...) est agencé, préférablement soudé.

3. Montant (2) selon la revendication 1 ou 2, **caractérisé en ce que** les saillies (20a, 20b, ...) s'étendent essentiellement parallèlement à la direction longitudinale du véhicule de transport (1).

4. Montant (2) selon les revendications 1 à 3, **caractérisé en ce que** les saillies (20a, 20b, ...) comportent une extension de moins que 50%, particulièrement de 40%, préférablement de moins que 30% de la longitude du montant.

5. Montant (2) selon l'une des revendications précédentes, **caractérisé en ce que** deux saillies (20a, 20b, ...) voisines sont conformées en une pièce ressemblante à un étrier (21).

6. Montant (2) selon la revendication 5, **caractérisé en ce que**, dans l'extension verticale, deux étriers ou cadres tubulaires (21) voisins sont reliés, préférablement soudés, l'un à l'autre, par des contrefiches transversales (22).

7. Montant (2) selon la revendication 5 ou 6, **caractérisé en ce que**, dans l'extension horizontale, deux étriers voisins (21) peuvent être reliés par des éléments de couplage (34) mécaniques et/ou électromagnétiques.

8. Montant (2) selon l'une des revendications précédentes, **caractérisé en ce que** le pied (13) du montant (2) est fixable à un point quelconque ou défini le long du bord longitudinal extérieur (16) de la carrosserie ou du châssis (32) du véhicule de transport (1) par un moyen inférieur de fixation (14).

9. Montant (2) selon l'une des revendications précédentes, **caractérisé en ce que** la tête du montant (7) est fixable à un point quelconque ou défini le long de la structure supérieure linéaire longitudinale (9) par un moyen supérieur de fixation (15), par exemple par enclenchement d'un verrou (15) dans une ouverture.

10. Montant (2) selon la revendication 8 ou 9, **caractérisé en ce que** le moyen inférieur de fixation (14) et le moyen supérieur de fixation (15) agissent ensemble (15) de sorte que la tête du montant (7) est fixable le long de la structure supérieure linéaire longitudinale (9) après un mouvement verrouillant du pied du montant (13).

11. Montant (2) selon l'une des revendications précédentes, **caractérisé en ce qu'**au moins à un côté du pied du montant (13) est placé, préférablement soudé, un élément d'appui (31).

12. Montant (2) selon l'une des revendications précédentes, **caractérisé en ce que** la tête du montant (7) et la partie centrale (5) du montant (2) sont conformées en deux pièces ainsi que peuvent être coulissées l'une contre l'autre.

13. Montant (2) selon la revendication 12, **caractérisé en ce que** la partie centrale (5), en particulier les surfaces intérieures (27) de celle-ci, servent de coulisse pour la tête du montant (7).

14. Montant (2) selon la revendication 12 ou 13, **caractérisé en ce qu'**entre la partie centrale (5) du montant (2) et la tête du montant (7) qui est coulissée dans cette partie centrale, un élément à ressort (23) est placé.

15. Montant (2) selon les revendications 12 à 14, **caractérisé en ce qu'**entre la partie centrale (5) du montant (2) et la tête du montant (7) est prévu un fixatif (24).

16. Structure (30), particulièrement structure à bâche, pour véhicules de transport (1), **caractérisée par** une structure supérieure linéaire longitudinale (9), à laquelle au moins un montant à coulisse (2) est pendu selon l'une des revendications précédentes.

17. Structure (30) selon la revendication 16, avec une bâche à coulisse (35) qui peut être coulissée dans la structure supérieure linéaire longitudinale (9) devant les montants (2), **caractérisée en ce que** la structure longitudinale (9) est agencée de façon à ce que la mobilité de la bâche à coulisse (35) est bloquée par chaque montant (2) qui (2) n'est pas fixé fonctionellement par ses moyens de fixation (14 ; 15).

18. Véhicule de transport (1), particulièrement véhicule routier ou sur rails comme des camions ou wagons, **caractérisé par** une structure (30), particulièrement une structure à bâche, selon l'une des revendications 16 ou 17, placée essentiellement au-dessus d'une surface de chargement (5).

19. Véhicule de transport (1) selon la revendication 18, **caractérisé par** des tringles d'arrêt (25), qui sont placées, préférablement soudées, latéralement le long de la surface de chargement (5).

20. Véhicule de transport (1) selon la revendication 19, **caractérisé en ce que** les tringles d'arrêt (25) comportent une hauteur maximale de 50%, particulièrement de 40%, préférablement de 30% de la hauteur d'une palette selon norme européenne.

21. Véhicule de transport (1) selon les revendications 18 à 20, **caractérisé en ce que** la surface de chargement (5) comporte un sol avec un coefficient de frottement (µ) élevé.
